# EUROPÄISCHE PATENTSCHRIFT

(11) **EP 1 734 346 B1**
(45) Veröffentlichungstag und Bekanntmachung des Hinweises auf die Patenterteilung: **28.10.2009**
(21) Anmeldenummer: 06011353.7
(22) Anmeldetag: 01.06.2006
(51) Int. Cl.: G01F 1/28, G01F 15/00

(54) **Verteilerventil**
Distribution valve
Soupape de distribution

(30) Priorität: 14.06.2005 DE 202005009326 U
(43) Veröffentlichungstag der Anmeldung: 20.12.2006
(73) Patentinhaber: STRAUB OHG, 73337 Bad Überkingen (DE)
(72) Erfinder: Langbein, Peter, 53708 Menden (DE)
(74) Vertreter: Fürst, Siegfried

(56) Entgegenhaltungen:
- EP-A- 0 949 486
- DE-U1- 20 111 656
- US-A1- 2004 035 470

## Beschreibung

Die Erfindung betrifft ein Verteilerventil mit einer Durchflussmesseinrichtung insbesondere für Warmwasser-Heizungsanlagen zum Einsatz in einem oder in mehreren Hauptrohren, wobei im Verteilerventil ein verschließbarer Ventilsitz vorgesehen ist und eine Durchflussmesseinrichtung mit einer Anzeige, die sich längs einer Achse in ein radial in das Hauptrohr ragendes Anschlussrohr des Verteilerventils erstreckt, bestehend aus einem durch die Strömung im Anschlussrohr auslenkbaren Anströmteil, dessen jeweilige Stellung im Anschlussrohr zur Anzeige einer Durchflussmenge des Mediums durch das Anschlussrohr von außen an der Durchflussmesseinrichtung ablesbar ist und einem Verschlussteil, mittels dem durch Drehung an einem Stellelement eine im Anschlussrohr vorgesehene Austrittsöffnung für die Einstellung der Durchflussmenge des Mediums geöffnet oder geschlossen wird.

Aus dem Stand der Technik sind derartige, mit einer Durchflussmesseinrichtung kombinierten Verteilerventile für Warmwasserheizungsanlagen insbesondere zum Einsatz in einer Hauptleitung und mehreren davon abzweigenden Anschlussleitungen bekannt. Die Verteilerventile dienen zum Abgleich der einzelnen Leitungen zueinander, zur Verhinderung von Leistungsverlusten, sowie zum hydraulischen Ausgleich in der Warmwasserheizungsanlage. Aus der WO 03089844 A1 "Verteilerventil mit Durchflussmesser für den Einbau im Zulauf", der DE 100 38 874 C2 "Ventil zum Regulieren und Messen des Strömungsdurchsatzes eines Fluids", und der DE 201 11 656 U1 "Ventilvorrichtung und Verteilervorrichtung", in denen Verteilerventile mit einem Durchflussmesser beschrieben werden, die durch eine speziell ausgebildete Einstellung- und Messeinheit ein genaues Ablesen der Durchflussmenge bei unruhiger Anzeige ermöglichen sollen.

Ausgehend von diesem Stand der Technik besteht die Aufgabe der Erfindung darin, ein Verteilerventil mit einer Durchflussmesseinrichtung weiter so zu verbessern, dass eine noch genauere Messung des Durchflusses und eine verbesserte feinfühligere Ventilverstellung für ein Verteilerventil mit einer Durchflussmesseinrichtung zu erhalten.

Gelöst wird diese Aufgabe durch ein Verteilerventil mit den Merkmalen des Anspruches 1. Bei diesem Verteilerventil ist im Wesentlichen vorgesehen, dass ein in einem Hauptrohr angeordnetes Verteilerventil ein rohrförmig ausgebildetes Element aufweist, letzteres in einem in einer oberen Öffnung des Hauptrohres abdichtend gehaltenen Befestigungselement angeordnet ist und sich bis in ein rechtwinklig zum Hauptrohr angeordnetes Anschlussrohr erstreckt, wobei in einem unteren Bereich des rohrförmigen Elements ein Verschlussteil angeordnet ist, das bei Drehung des rohrförmigen Elements längs einer Verschiebeachse so bewegt wird, dass das Verteilerventil geöffnet oder geschlossen wird, wobei in dem rohrförmigen Element ein Stößel mit einem an seinem oberen Ende vorgesehen Anzeigeteil und einem an seinem unteren Ende vorgesehenen Anströmteil längs der Verschiebeachse geführt ist, so dass das Anströmteil in eine Endstellung auslenkbar ist und wobei die einzelnen Stellungen des Anströmteils mittels des Anzeigeteils an einer Durchflussmesseinrichtung ablesbar sind.

Eine vorteilhafte Ausführungsform besteht darin, dass das rohrförmige Element in dem Befestigungselement insbesondere mittels eines Bewegungsgewindes längs der Verschiebeachse beweglich vorgesehen ist und dass zur Abdichtung des längsbeweglichen rohrförmigen Elementes dessen Mantelfläche zwei Ausnehmungen mit darin angeordneten Dichtelementen aufweist, die das rohrförmige Element gegen eine Innenbohrung des Befestigungselementes abdichten.

Bevorzugt ist zudem vorgesehen, dass das rohrförmige Element eine Innenbohrung aufweist, die in dem unteren Bereich des rohrförmigen Elementes verschlossen und in einem oberen Bereich des rohrförmigen Elements geöffnet ist.

Eine vorteilhafte Weiterbildung wird darin gesehen, dass das insbesondere halbrund ausgebildete und am unteren Ende des rohrförmigen Elementes angeformte Verschlussteil in einer im Anschlussrohr vorgesehenen Bohrung längs der Verschiebeachse bewegbar vorgesehen ist.

Eine besonders bevorzugte Ausführungsform wird darin gesehen, dass das zum Verschließen des Verteilerventils vorgesehene Verschlussteil längs der Verschiebeachse in einer Bohrung im Anschlussrohr so weit bewegt wird, bis das Verschlussteil mit seiner Mantelfläche an einer im Anschlussrohr angeordneten Kegelbohrung anliegt und dass zum Öffnen des Verteilerventils das Verschlussteil längs der Verschiebeachse in der Bohrung im Anschlussrohr so weit angehoben wird, dass das Wasser von dem Hauptrohr durch eine am Umfang im rohrförmigen Element im Bereich des Hauptrohres angeordneten Querbohrung in eine Innenbohrung des rohrförmigen Elementes und über eine zweite Querbohrung in die Bohrung des Anschlussrohres und durch einen zwischen der Mantelfläche des Verschlussteiles und einer Kegelbohrung entstandenen Ventilspalt fließt, wobei das Wasser durch beide im Bereich des Hauptrohrs angeordnete Querbohrungen des rohrförmigen Elements insbesondere zweifach mit gleicher Drehrichtung umlenkt wird und in das Anschlussrohr fließt.

Eine besonders vorteilhafte Variante wird darin gesehen, dass das rohrförmige Element eine Innenbohrung aufweist, die im unteren im unteren Bereich des rohrförmigen Elements geöffnet ist, wobei in einem unteren Bereich des Anschlussrohres ein Verschlussteil mittels Stegen an der Wandung der Bohrung des Anschlussrohres befestigt ist, so dass sich bei Drehung des rohrförmigen Elementes um die Verschiebeachse die Innenbohrung des rohrförmigen Elements in der Bohrung im Anschlussrohr über das insbesondere zylinderförmig ausgebildete Verschlussteil schiebt und damit das Verteilerventil geschlossen oder bei Drehung des rohrförmigen Elementes in umgekehrter Richtung geöffnet wird, so dass durch die geöffnete Innenbohrung des rohrförmigen Elements das Wasser ohne nochmalige Umlenkung in das Anschlussrohr fließt. Die Innenbohrung des rohrförmigen Elements ist dazu im unteren Bereich insbesondere kegelförmig ausgebildet.

Bevorzugt ist weiterhin vorgesehen, dass zur Abdichtung des rohrförmigen Elements gegenüber der Bohrung im Anschlussrohr die Mantelfläche des rohrförmigen Elements eine Ausnehmung, insbesondere eine Nut aufweist, die ein ringförmig ausgebildetes Dichtelement aufweist, das das rohrförmige Element in der Wandung der Bohrung des Anschlussrohres abdichtet.

Eine weitere vorteilhafte Variante wird auch darin gesehen, dass der Stößel in einer in der Innenbohrung des rohrförmigen Elements angeordneten Buchse so geführt ist, dass das an dem Stößel angeordnete Anströmteil und das Anzeigeteil in der Innenbohrung des rohrförmigen Elements längs der Verschiebeachse verschiebbar sind.

Weiterhin ist vorteilhaft eine schraubenförmig um den Stößel sich erstreckende Druckfeder vorgesehen, die sich an dem Anzeigteil und an der in der Innenbohrung des rohrförmigen Elements vorgesehenen Buchse abstützt und das Anströmteil in eine Endstellung drückt, wobei das Anströmteil erst durch die Strömung des Wassers im Anschlussrohr ausgelenkt wird, und dass die Durchflussmenge mittels des Anzeigeteils an der auf einer Mantelfläche einer Abdeckkappe der Durchflussmesseinrichtung angeordneten Skala ablesbar ist.

Wesentlich an dem neuen Verteilerventil mit der darauf angeordneten Durchflussmesseinrichtung ist neben der Trennung der Ventilschließeinrichtung von der Durchflussmesseinrichtung, dass das Verschlussteil im Anschlussrohr angeordnet. Damit wird eine turbulente Anströmung des Anströmteiles der Durchflussmesseinrichtung beim Strömen des Wasser bei geöffnetem Ventil vermieden. Das zusätzlich Neue bei diesem Verteilerventil besteht jetzt darin, dass durch die Anordnung des zylindrisch ausgebildeten rohrförmigen Elements, das sich vom Hauptrohr bis in das Anschlussrohr erstreckt, mit seinem im unteren Bereich angeordneten Verschlussteil und dem im rohrförmigen Element geführten Stößel mit dem Anströmteil im rohrförmigen Element oberhalb des Verschlussteiles die auftretenden Verwirbelungen nahezu ausgeschaltet sind und damit wird eine genauere Durchflussmessung erzielt. Weiterhin wird durch die Ausbildung des rohrförmigen Elementes eine neue verbesserte Abdichtung für das Verteilerventil erreicht, so dass zwar auch eine zweifache Umlenkung der Strömung im Bereich des Anströmteils erfolgt, aber nicht wie in bekannten technischen Lösungen in zwei entgegengesetzten Richtungen, was ebenfalls zur Verminderung von Turbulenzen führt, so dass eine weiter verbesserte, feinfühligere Verstellung des Verteilerventils erhalten wird. Eine weitere Verbesserung zur Durchführung einer genaueren Durchflussmessung und einer verbesserten feinfühligeren Ventilverstellung für ein Verteilerventil wird auch durch eine weitere Lösungsvariante erhalten, indem die Strömung des Wassers nur einmal umgelenkt wird.

Die Erfindung wird nachfolgend anhand von schematisch in Zeichnungen dargestellten bevorzugten Ausführungsbeispielen näher erläutert.
Es zeigen:
- Figur 1: ein erstes Ausführungsbeispiel eines Verteilerventils in Schnittdarstellung;
- Figur 2: ein zweites Ausführungsbeispiel des Verteilerventils in Schnittdarstellung.

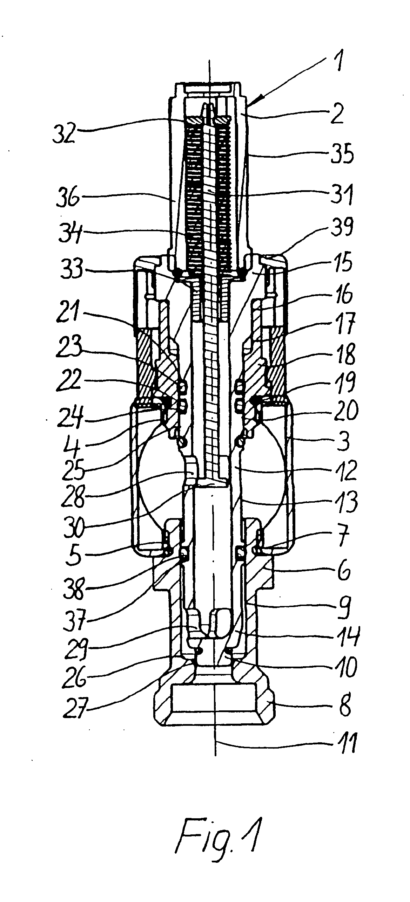

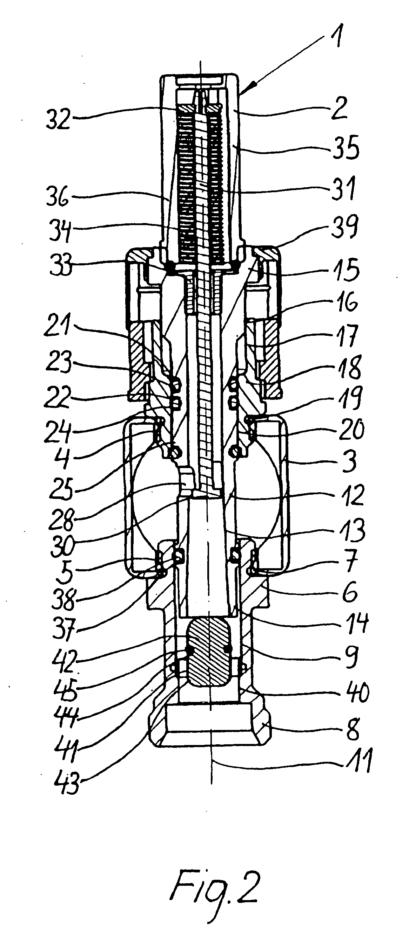

Figur 1 und 2 zeigen ein Verteilerventil 1 mit einer Durchflussmesseinrichtung 2, das im Vorlauf eines Warmwasser-Heizungssystems in ein Hauptrohr 3 eingesetzt wird, und das im Hauptrohr 3 Öffnungen 4, 5 aufweist, wobei in der oberen Öffnung 4 das Verteilerventil 1 mit der Durchflussmesseinrichtung 2 abdichtend gehalten ist und in der gegenüberliegenden unteren Öffnung 5 ein radial in das Hauptrohr 3 ragendes, vorzugsweise durch eine Schraubverbindung befestigtes Anschlussrohr 6 vorgesehen ist. Die Schraubverbindung wird durch einen Dichtring, einen O-Ring 7 abgedichtet. Das dem Hauptrohr 3 abgewandte Ende des Anschlussrohres 6 weist einen Gewindeansatz 8 zur Befestigung eines nicht dargestellten weiterführenden Rohres auf. In einer im Anschlussrohr 6 vorgesehenen Bohrung 9 ist ein Verschlussteil 10 angeordnet, das sich längs einer Verschiebeachse 11 in der Bohrung 9 des Anschlussrohres 6 bewegt. Das Verschlussteil 10 ist an einem unteren Bereich 14 eines zylindrisch, rohrförmig ausgebildeten Elementes 12, das sich von der oberen Öffnung 4 des Hauptleitungsrohres 3 längs der Verschiebeachse 11 1 bis in das Anschlussrohr 6 erstreckt, angeordnet. Das rohrförmige Element 12 weist eine Innenbohrung 13 auf, die nicht durchgehend ausgebildet, sondern im unteren Bereich 14 des rohrförmigen Elementes 12 verschlossen ist und in einem oberen Bereich 15 geöffnet ist. Im oberen Bereich 15 des rohrförmigen Elementes 12 ist ein Gewindezapfen 16 angeordnet, der in eine Gewindebohrung 17 eines Befestigungselements 18 eingeschraubt ist. Das Befestigungselement 18 ist durch eine Schraubverbindung in der oberen Öffnung 4 des Hauptrohres 3 befestigt. Zur Abdichtung des Bewegungsgewindes 16, 17 ist ein Dichtring, ein O-Ring 19 eingesetzt. Bei Drehung des rohrförmigen Elementes 12 um die Verschiebeachse 11 wird so das Verschlussteil 10 längs der Verschiebeachsechse 11 in der Bohrung 9 des Anschlussrohres 6 bewegt. Zur Abdichtung des längsbewegten rohrförmigen Elementes 12 sind unterhalb des Bewegungsgewindes 16, 17 an einer Mantelfläche 20 des rohrförmigen Elementes 12 zwei Ausnehmungen, insbesondere zwei Nuten 21, 22 vorgesehen, in denen zwei Dichtringe 23, 24 angeordnet sind, die die Mantelfläche 20 des rohrförmigen Elementes 12 gegen eine Innenbohrung 25 des Befestigungselementes 18 abdichten. Wird das rohrförmige Element 12 im Uhrzeigersinn gedreht, bewegt sich das Verschlussteil 10 längs der Verschiebeachse 11 in der Bohrung 9 des Anschlussrohres 6 bis es mit seiner Mantelfläche 26 an einer im Anschlussrohr 6 angeordneten Kegelbohrung 27 anliegt. In dieser Stellung ist das Verteilerventil 1 geschlossen und es kann kein Wasser vom Hauptrohr 3 in das Anschlussrohr 6 strömen. Soll durch das Anschlussrohr 6 Wasser fließen, wird durch Drehen des rohrförmigen Elementes 12 entgegen dem Uhrzeigersinn das Verschlussteil 10 angehoben und das Wasser fließt von dem Hauptrohr 3 durch eine im rohrförmigen Element 12 im Bereich des Hauptrohres 3 am Umfang des rohrförmigen Elementes 12 angeordnete Querbohrungen 28 in die Innenbohrung 13 des rohrförmigen Elementes 12 und über eine Querbohrungen 29 in die Bohrung 9 des Anschlussrohres 6 und von dort durch einen Ventilspalt zwischen einer Mantelfläche 26 des Verschlussteiles 10 und einer im Anschlussrohr 6 angeordnete Kegelbohrung 27 in das Anschlussrohr 6. Das Wasser wird in seinem Verlauf durch die beiden Querbohrungen 28, 29 zweimal umgelenkt. Durch unterschiedliches Anheben des Verschlussteiles 10 kann durch Veränderung der Größe des nicht näher dargestellten Ventilspaltes der Wasserstrom variiert werden. Die Mantelfläche 26 des Verschlussteiles 10 ist so ausgebildet, das eine entsprechend feinfühlige Ventilverstellung vorgenommen werden kann.
Zur Messung des Durchflusses ist in der Innenbohrung 13 des rohrförmigen Elementes 12 unterhalb der Querbohrung 28 ein Anströmteil 30 angeordnet, das am unteren Ende eines Stößels 31 befestigt ist, wobei an einem oberen Ende des Stößels 31 ein Anzeigeteil 32 angeordnet ist, zur Anzeige eines Messwertes. Der Stößel 31 ist in einer in der Innenbohrung 13 des rohrförmigen Elementes 12 angeordneten Buchse 33 geführt, so dass sich das Anströmteil 30 in der Innenbohrung 13 des rohrförmigen Elementes 12 längs der Verschiebeachse 11 verschieben kann und sich über den Stößel 31 auch das Anzeigeteil 32 verschiebt. An dem Anzeigeteil 32 stützt sich eine schraubenförmig um den Stößel 31 sich erstreckende Druckfeder 34 ab. Gleichzeitig stützt sich die Druckfeder 34 an der in der Innenbohrung 13 des rohrförmigen Elementes 12 angeordneten Buchse 33 ab, so dass das Anströmteil 30 in eine Endstellung gedrückt und erst durch die Strömung des Wassers in der Innenbohrung 13 des rohrförmigen Elementes 12 ausgelenkt wird. Durch die gleichzeitige Auslenkung des Anzeigeteiles 32 kann die Durchflussmenge an einer auf einer Mantelfläche 35 einer Abdeckkappe 36 der Durchflussmesseinrichtung 2 angeordneten nicht näher dargestellten bekannten Messskala abgelesen werden, da die Abdeckkappe 36 durchsichtig ausgebildet ist. Die sich einstellende Lage des Anströmteiles 30 und damit des Anzeigeteils 32 ist von der Größe des Volumenstromes abhängig. Eine fertigungstechnisch günstige, als auch materialsparende Ausgestaltung besteht darin, dass das Anströmteil 30, der Stößel 31 und das Anzeigeteil 32 aus Kunststoff ausgebildet sind.
Um ein Durchströmen des Wassers vom Hauptrohr 3 direkt durch die Bohrung 9 des Anschlussrohres 6 zu vermeiden, ist in der Mantelfläche des rohrförmigen Elementes 12 eine Nut 37 eingebracht, in die ein O-Ring 38 eingelegt ist, der das rohrförmige Elemente 12 in der Wandung der Bohrung 9 des Anschlussrohres 6 abdichtet. Um ein unbeabsichtigtes Verstellen des rohrförmigen Elementes 12 zu verhindern, wird eine Abschlusskappe 39 auf das rohrförmige Elemente 12 aufgesteckt.
In einem zweiten Ausführungsbeispiel entsprechend Figur 2 ist die Innenbohrung 13 des rohrförmigen Elementes 12 im unteren Bereich 14 geöffnet, so dass das Wasser bei geöffnetem Ventil (dargestellter Zustand) vom Hauptrohr 3 durch die im rohrförmigen Element 12 im Bereich des Hauptrohres 3 am Umfang des rohrförmigen Elementes 12 angeordneten Querbohrungen 28 in die Innenbohrung 13 des rohrförmigen Elementes 12 fließt und von dort ohne nochmalige Umlenkung an dem im unteren Bereich 40 des Anschlussrohres 6 an Stegen 41 an der Wandung der Bohrung 9 des Anschlussrohres 6 befestigten zylinderförmigen Verschlussteiles 42 vorbei. Wird das rohrförmige Elementes 12 durch Drehen im Uhrzeigersinn abgesenkt, stülpt sich Innenbohrung 13 des rohrförmigen Elementes 12 über das zylinderförmige Verschlussteil 42 und das Wasser kann nicht mehr vom Hauptrohr 3 durch die im rohrförmigen Element 12 im Bereich des Hauptrohres 3 angeordneten Querbohrungen 28 in die Innenbohrung 13 des rohrförmigen Elementes 12 fließen und damit ist das Verteilerventil 1 geschlossen. Zur Abdichtung zwischen dem zylinderförmigen Verschlussteil 42 und der kegelförmig ausgebildeten Innenbohrung 13 des rohrförmigen Elementes 12 ist an einer Mantelfläche 43 des zylinderförmigen Verschlussteiles 42 eine Nut 44 eingebracht, in die ein Dichtring 45 eingelegt ist.

### Bezugszeichenliste

- 1: Verteilerventil
- 2: Durchflussmesseinrichtung
- 3: Hauptrohr
- 4: obere Öffnung im Hauptrohr
- 5: untere Öffnung im Hauptrohr
- 6: Anschlussrohr
- 7: O-Ring
- 8: Gewindeansatz
- 9: Bohrung
- 10: Verschlussteil
- 11: Verschiebeachse des Anschlussrohres
- 12: rohrförmiges Element
- 13: Innenbohrung des rohrförmigen Elements
- 14: untere Bereich des rohrförmigen Elements
- 15: oberer Bereich des rohrförmigen Elements
- 16: Gewindezapfen
- 17: Gewindebohrung
- 18: Befestigungselement
- 19: O-Ring
- 20: Mantelfläche des rohrförmigen Elements
- 21: Nut
- 22: Nut
- 23: O-Ring
- 24: O-Ring
- 25: Innenbohrung des Befestigungselementes
- 26: Mantelfläche des Verschlussteiles
- 27: Kegelbohrung
- 28: Querbohrung
- 29: Querbohrung
- 30: Anströmteil
- 31: Stößel
- 32: Anzeigeteil
- 33: Buchse
- 34: Druckfeder
- 35: Mantelfläche der Abdeckkappe
- 36: Abdeckkappe
- 37: Nut in der Mantelfläche
- 38: O-Ring
- 39: Abschlusskappe
- 40: unterer Bereich des Anschlussrohres
- 41: Steg
- 42: zylinderförmiges Verschlussteil
- 43: Mantelfläche des zylindrischen Verschlussteiles
- 44: Nut in der Mantelfläche des zylindrischen Verschlussteiles
- 45: O-Ring

## Patentansprüche

1. Verteilerventil mit einer Durchflussmesseinrichtung insbesondere für Warmwasser-Heizungsanlagen zum Einsatz in einem oder in mehreren Hauptrohren, wobei im Verteilerventil ein verschließbarer Ventilsitz vorgesehen ist und eine Durchflussmesseinrichtung mit einer Anzeige, die sich längs einer Achse in ein radial in das Hauptrohr ragendes Anschlussrohr des Verteilerventils erstreckt, bestehend aus einem durch die Strömung im Anschlussrohr auslenkbaren Anströmteil, dessen jeweilige Stellung im Anschlussrohr zur Anzeige einer Durchflussmenge des Mediums durch das Anschlussrohr von außen an der Durchflussmesseinrichtung ablesbar ist und einem Verschlussteil, mittels dem durch Drehung an einem Stellelement eine im Anschlussrohr vorgesehene Austrittsöffnung für die Einstellung der Durchflussmenge des Mediums geöffnet oder geschlossen wird, und
das Verteilerventil (1) ein rohrförmig ausgebildetes Element (12) aufweist, das in einem in einer oberen Öffnung (4) des Hauptrohrs (3) abdichtend gehaltenen Befestigungselement (18) angeordnet ist und sich bis in ein rechtwinklig zum Hauptrohr (3) angeordnetes Anschlussrohr (6) erstreckt, **dadurch gekennzeichnet, dass** in einem unteren Bereich (14) des rohrförmigen Elements (12) ein Verschlussteil (10) angeordnet ist, das bei Drehung des rohrförmigen Elements (12) längs einer Verschiebeachse (11) so bewegt wird, dass das Verteilerventil (1) geöffnet oder geschlossen wird, wobei in dem rohrförmigen Element (12) ein Stößel (31) mit einem an seinem oberen Ende vorgesehenen Anzeigeteil (32) und einem an seinem unteren Ende vorgesehenen Anströmteil (30) längs der Verschiebeachse (11) geführt ist, so dass das Anströmteil (30) in eine Endstellung auslenkbar ist und wobei die einzelnen Stellungen des Anströmteils (30) mittels des Anzeigeteils (32) an einer Durchflussmesseinrichtung (2) ablesbar sind.

2. Verteilerventil nach Anspruch 1,
**dadurch gekennzeichnet, dass**
das rohrförmige Element (12) in dem Befestigungselement (18) insbesondere mittels eines Bewegungsgewindes (16, 17) längs der Verschiebeachse (11) beweglich vorgesehen ist.

3. Verteilerventil nach Anspruch 1 und 2,
**dadurch gekennzeichnet, dass**
zur Abdichtung des längsbeweglichen rohrförmigen Elementes (12) dessen Mantelfläche (20) zwei Ausnehmungen (21, 22) mit darin angeordneten Dichtelementen (23, 24) aufweist, die das rohrförmige Element (12) gegen eine Innenbohrung (25) des Befestigungselementes (18) abdichten.

4. Verteilerventil nach einem der Ansprüche 1 bis 3,
**dadurch gekennzeichnet, dass**
das rohrförmige Element (12) eine Innenbohrung (13) aufweist, die in dem unteren Bereich (14) des rohrförmigen Elementes (12) verschlossen und in einem oberen Bereich (15) geöffnet ist.

5. Verteilerventil nach einem der Ansprüche 1 bis 4,
**dadurch gekennzeichnet, dass**
das insbesondere halbrund ausgebildete und am unteren Ende des rohrförmigen Elementes (12) angeformte Verschlussteil (10) in einer im Anschlussrohr (6) vorgesehenen Bohrung (9) längs einer Verschiebeachse (11) bewegbar vorgesehen ist.

6. Verteilerventil nach einem der Ansprüche 1 bis 5,
**dadurch gekennzeichnet, dass**
die Bohrung (9) im Anschlussrohr (6) derart angeordnet und ausgebildet ist, dass das Verschlussteil (10) längs der Verschiebeachse (11) in der Bohrung (9) zum Verschließen des Verteilerventils so bewegbar ist, dass das Verschlussteil (10) mit seiner Mantelfläche (26) an einer im Anschlussrohr (6) angeordneten insbesondere kegelförmig ausgebildeten Bohrung (27) anlegbar ist.

7. Verteilerventil nach einem der Ansprüche 1 bis 6,
**dadurch gekennzeichnet, dass**
die Bohrung (9) im Anschlussrohr (6) derart angeordnet und ausgebildet ist, dass das Verschlussteil (10) längs der Verschiebeachse (11) in der Bohrung (9) zum Öffnen des Verteilerventils (1) so bewegbar ist, dass das Wasser von dem Hauptrohr (3) durch eine am Umfang im rohrförmigen Element (12) im Bereich des Hauptrohres (3) angeordneten Querbohrung (28) in eine Innenbohrung (13) des rohrförmigen Elementes (12) und über eine Querbohrung (29) in die Bohrung (9) des Anschlussrohres (6) und durch einen zwischen der Mantelfläche (26) des Verschlussteiles (10) und der Kegelbohrung (27) entstandenen Ventilspalt fließt, wobei das Wasser durch die beiden Querbohrungen (28,29) des rohrförmigen Elements (12) insbesondere zweifach mit gleicher Drehrichtung umlenkt wird und in das Anschlussrohr (6) fließt.

8. Verteilerventil nach Anspruch 1 bis 3,
**dadurch gekennzeichnet, dass**
das rohrförmige Element (12) eine Innenbohrung (13) aufweist, die im unteren Bereich (14) des rohrförmigen Elements (12) geöffnet ist.

9. Verteilerventil nach Anspruch 8,
**dadurch gekennzeichnet, dass**
in einem unteren Bereich (40) des Anschlussrohres (6) ein Verschlussteil (42) mittels Stegen (41) an der Wandung der Bohrung (9) des Anschlussrohres (6) befestigt ist, so dass sich bei Drehung des rohrförmigen Elementes (12) um die Verschiebeachse (11) die Innenbohrung (13) das rohrförmige Element (12) in der Bohrung (9) im Anschlussrohr (6) über das Verschlussteil (42) schiebt und damit das Verteilerventil (1) geschlossen oder bei Drehung des rohrförmigen Elements (12) in umgekehrter Richtung geöffnet wird, so dass durch die geöffnete Innenbohrung (13) des rohrförmigen Elementes (12) das Wasser ohne nochmalige Umlenkung in das Anschlussrohr (6) fließt.

10. Verteilerventil nach Anspruch 8 und 9,
**dadurch gekennzeichnet, dass**
das Verschlussteil (42) insbesondere zylinderförmig ausgebildet ist.

11. Verteilerventil nach einem der Ansprüche 8 bis 10,
**dadurch gekennzeichnet, dass**
die Innenbohrung (13) des rohrförmigen Elementes (12) im unteren Bereich (14) insbesondere kegelförmig ausgebildet ist.

12. Verteilerventil nach einem der Ansprüche 1 bis 11,
**dadurch gekennzeichnet, dass**
zur Abdichtung des rohrförmigen Elementes (12) gegenüber der Bohrung (9) im Anschlussrohr (6) die Mantelfläche des rohrförmigen Elements (12) eine Ausnehmung (37), insbesondere eine Nut aufweist, die ein ringförmig ausgebildetes Dichtelement (38) aufweist, das das rohrförmige Element (12) in der Wandung der Bohrung (9) des Anschlussrohres (6) abdichtet.

13. Verteilerventil nach einem der Ansprüche 1 bis 12,
**dadurch gekennzeichnet, dass**
der Stößel (31) in einer in der Innenbohrung (13) des rohrförmigen Elements (12) angeordneten Buchse (33) so geführt ist, dass das Anströmteil (30) und das Anzeigeteil (32) in der Innenbohrung (13) des rohrförmigen Elements (12) längs der Verschiebeachse (11) verschiebbar sind.

14. Verteilerventil nach einem der Ansprüche 1 bis 13,
**dadurch gekennzeichnet, dass**
eine schraubenförmig um den Stößel (31) sich erstreckende Druckfeder (34) vorgesehen ist, die sich an dem Anzeigteil (32) und an der in der Innenbohrung (13) des rohrförmigen Elements (12) vorgesehenen Buchse (33) abstützt und das Anströmteil (30) in eine Endstellung drückt, wobei das Anströmteil (30) durch die Strömung des Wassers im Anschlussrohr (6) ausgelenkt wird.

15. Verteilerventil nach einem der Ansprüche 1 bis 14,
**dadurch gekennzeichnet, dass**
die Durchflussmenge mittels des Anzeigeteils (32) an der auf einer Mantelfläche (35) einer Abdeckkappe (36) der Durchflussmesseinrichtung (2) angeordneten Skala ablesbar ist.

## Claims

1. Distributor valve with a throughflow meter, particularly for hot water heating installations for use in one or more mains pipes, wherein a closable valve seat is provided in the distributor valve and a throughflow meter with an indicator, which extends along an axis in a connecting pipe, which projects radially into the mains pipe, of the distributor valve, consisting of an incident flow part, which is deflectable by the flow in the connecting pipe and the respective setting of which in the connecting pipe is externally readable at the throughflow meter for indication of a throughflow quantity of the medium through the connecting pipe, and a closure part by means of which through rotation at a setting element an outlet opening, which is provided in the connecting pipe, for setting of the throughflow quantity of the medium is opened or closed, and the distributor valve (1) comprises an element (12) of tubular construction which is arranged in a fastening element (18) - which is sealingly mounted in an upper opening (4) of the mains pipe (3) - and which extends in a connecting pipe (6) arranged at right angles to the mains pipe (3), **characterised in that** a closure part (10) which on rotation of the tubular element (12) is so moved along a displacement axis (11) that the distributor valve (1) is opened or closed is arranged in a lower region (14) of the tubular element (12), wherein a plunger (31) with an indicator part (32) provided at its upper end and an incident flow part (30) provided at its lower end is guided in the tubular element (12) along the displacement axis (11) so that the incident flow part (30) is deflectable into an end setting and wherein the individual settings of the incident flow part (30) are readable by means of the indicator part (32) at a throughflow meter (2).

2. Distributor valve according to claim 1, **characterised in that** the tubular element (12) is provided in the fastening element (18) to be movable along the displacement axis (11) in particular by means of a movement thread (16, 17).

3. Distributor valve according to claim 1 and 2, **characterised in that** for sealing the longitudinally movable tubular element (12) the circumferential surface (20) thereof has two recesses (21, 22) with sealing elements (23, 24) which are arranged therein and which seal the tubular element (12) relative to an inner bore (25) of the fastening element (18).

4. Distributor valve according to any one of claims 1 to 3, **characterised in that** the tubular element (12) has an inner bore (13) which is closed in the lower region (14) of the tubular element (12) and open in an upper region (15).

5. Distributor valve according to any one of claims 1 to 4, **characterised in that** the closure part (10), which is, in particular, constructed to be semicircular and which is formed at the lower end of the tubular element (12), is provided in a bore (9), which is provided in the connecting pipe (6), to be movable along a displacement axis.

6. Distributor valve according to any one of claims 1 to 5, **characterised in that** the bore (9) is constructed and arranged in the connecting pipe (6) in such a manner that the closure part (10) is so movable along the displacement axis (11) in the bore (9) for closing the distributor valve that the closure part (10) can be placed by the circumferential surface (26) thereof against a bore (27) which is arranged in the connecting pipe (6) and of, in particular, conical construction.

7. Distributor valve according to any one of claims 1 to 6, **characterised in that** the bore (9) is constructed and arranged in the connecting pipe (6) in such a manner that the closure part (10) is so movable along the displacement axis (11) in the bore (9) for opening the distributor valve (1) that the water flows from the mains pipe (3) through a transverse bore (28), which is arranged at the circumference in the tubular element (12) in the region of the mains pipe (3), into an inner bore (13) of the tubular element (12) and via a transverse bore (29) into the bore (9) of the connecting pipe (6) and through a valve gap created between the circumferential surface (26) of the closure part (10) and the conical bore (27), wherein the water is deflected by the two transverse bores (28, 29) of the tubular element (12), in particular, twice with the same direction of rotation and flows into the connecting pipe (6).

8. Distributor valve according to claim 1 to 3, **characterised in that** the tubular element (12) has an inner bore (13) which is open in the lower region (14) of the tubular element (12).

9. Distributor valve according to claim 8, **characterised in that** a closure part (42) is fastened in a lower region (40) of the connecting pipe (6) by means of webs (41) to the wall of the bore (9) of the connecting pipe (6) so that on rotation of the tubular element (12) about the displacement axis (11) the inner bore (13) of the tubular element (12) displaces in the bore (9) in the connecting pipe (6) over the closure part (42) and thus the distributor valve (1) is closed or, on rotation of the tubular element (12) in opposite direction, opened so that the water flows through the opened inner bore (13) of the tubular element (12) without repeated deflection in the connecting pipe (6).

10. Distributor valve according to claim 8 and 9, **characterised in that** the closure part (42) is, in particular, of cylindrical construction.

11. Distributor valve according to any one of claims 8 to 10, **characterised in that** the inner bore (13) of the tubular element (12) is, in particular, of conical construction in the lower region (14).

12. Distributor valve according to any one of claims 1 to 11, **characterised in that** for sealing of the tubular element (12) relative to the bore (9) in the connecting pipe (6) the circumferential surface of the tubular element (12) has a recess (37), in particular a groove, which has an annular sealing element (38) which seals the tubular element (12) in the wall of the bore (9) of the connecting pipe (6).

13. Distributor valve according to any one of claims 1 to 12, **characterised in that** the plunger (31) is so guided in a bush (33) arranged in the inner bore (13) of the tubular element (12) that the incident flow part (30) and the indicator part (32) are displaceable in the inner bore (13) of the tubular element (12) along the displacement axis (11).

14. Distributor valve according to any one of claims 1 to 13, **characterised in that** a compression spring (34), which extends helically around the plunger (31) and which is supported at the indicator part (32) and at the bush (33) provided in the inner bore (13) of the tubular element (12) and urges the incident flow part (30) into an end setting, is provided, wherein the incident flow part (30) is deflected by the flow of the water in the connecting pipe (6).

15. Distributor valve according to any one of claims 1 to 14, **characterised in that** the throughflow quantity can be read off by means of the indicator part (32) at the scale arranged on a circumferential surface (35) of a cover cap (36) of the throughflow meter (2).

## Revendications

1. Soupape de distribution équipée d'un dispositif mesureur de débit, en particulier pour des installations de chauffage et de production d'eau chaude, conçue pour l'utilisation dans une ou plusieurs tubulure(s) principale(s), sachant qu'un siège d'obturation apte à la fermeture est prévu dans ladite soupape de distribution, ainsi qu'un dispositif mesureur de débit muni d'un affichage et s'engageant, le long d'un axe, dans une tubulure de raccordement de ladite soupape de distribution qui pénètre radialement dans la tubulure principale, comprenant une pièce d'afflux qui peut être déviée par la circulation s'opérant dans la tubulure de raccordement et dont la position considérée dans ladite tubulure de raccordement peut être lue de l'extérieur, sur ledit dispositif mesureur de débit, en vue d'afficher un débit du fluide parcourant ladite tubulure de raccordement ; et une pièce obturatrice au moyen de laquelle un orifice de sortie prévu dans ladite tubulure de raccordement est ouvert ou fermé, par rotation imprimée à un élément de réglage, en vue d'ajuster le débit dudit fluide, ladite soupape de distribution (1) présentant un élément (12) de réalisation tubulaire qui est logé dans un élément de fixation (18) retenu, de manière étanche, dans un orifice supérieur (4) de la tubulure principale (3), et qui s'étend jusque dans une tubulure de raccordement (6) agencée à angle droit vis-à-vis de ladite tubulure principale (3),
**caractérisée par le fait**
**qu'**une région inférieure (14) de l'élément tubulaire (12) renferme une pièce obturatrice (10) qui, lors d'une rotation de l'élément tubulaire (12), est mise en mouvement le long d'un axe de coulissement (11) de façon telle que ladite soupape de distribution (1) soit ouverte ou fermée, un coulisseau (31), muni d'une pièce de visualisation (32) prévue à son extrémité supérieure et d'une pièce d'afflux (30) prévue à son extrémité inférieure, étant guidé le long dudit axe de coulissement (11), dans ledit élément tubulaire (12), de telle manière que ladite pièce d'afflux (30) puisse être déviée vers une position extrême, les positions individuelles de ladite pièce d'afflux (30) pouvant être lues sur un dispositif (2) mesureur de débit, au moyen de ladite pièce de visualisation (32).

2. Soupape de distribution selon la revendication 1,
**caractérisée par le fait que**
l'élément tubulaire (12) est prévu dans l'élément de fixation (18) avec mobilité le long de l'axe de coulissement (11), en particulier au moyen d'un ensemble fileté (16, 17) autorisant un mouvement.

3. Soupape de distribution selon les revendications 1 et 2,
**caractérisée par le fait que**,
pour assurer l'étanchéité de l'élément tubulaire (12) à mobilité longitudinale, la surface périphérique (20) dudit élément comporte deux évidements (21, 22) dans lesquels se trouvent des éléments d'étanchement (23, 24) qui procurent, audit élément tubulaire (12), une étanchéité contre un alésage intérieur (25) dudit élément de fixation (18).

4. Soupape de distribution selon l'une des revendications 1 à 3,
**caractérisée par le fait que**
l'élément tubulaire (12) présente un alésage intérieur (13) obturé dans la région inférieure (14) dudit élément tubulaire (12), et ouvert dans une région supérieure (15).

5. Soupape de distribution selon l'une des revendications 1 à 4,
**caractérisée par le fait que**
la pièce obturatrice (10), notamment de réalisation semi-circulaire et faisant corps avec l'extrémité inférieure de l'élément tubulaire (12), est prévue dans un alésage (9) pratiqué dans la tubulure de raccordement (6), avec mobilité le long d'un axe de coulissement (11).

6. Soupape de distribution selon l'une des revendications 1 à 5,
**caractérisée par le fait que**
l'alésage (9) pratiqué dans la tubulure de raccordement (6) est agencé et conçu de manière à conférer une mobilité à la pièce obturatrice (10) dans ledit alésage (9), le long de l'axe de coulissement (11), en vue de fermer ladite soupape de distribution, de façon telle que ladite pièce obturatrice (10) puisse être appliquée, par sa surface périphérique (26), contre un perçage (27) notamment de réalisation tronconique, situé dans ladite tubulure de raccordement (6).

7. Soupape de distribution selon l'une des revendications 1 à 6,
**caractérisée par le fait que**
l'alésage (9) pratiqué dans la tubulure de raccordement (6) est agencé et conçu de manière à conférer une mobilité à la pièce obturatrice (10) dans ledit alésage (9), le long de l'axe de coulissement (11), en vue d'ouvrir ladite soupape de distribution, de façon telle que l'eau provenant de la tubulure principale (3) afflue dans un alésage intérieur (13) de l'élément tubulaire (12), en empruntant un perçage transversal (28) situé sur le pourtour dudit élément tubulaire (12) dans la région de ladite tubulure principale (3) ; pénètre dans l'alésage (9) de la tubulure de raccordement (6) en empruntant un perçage transversal (29) ; et s'écoule par un interstice de distribution réservé entre le perçage tronconique (27) et la surface périphérique (26) de la pièce obturatrice (10), sachant que l'eau, parcourant les deux perçages transversaux (28, 29) de l'élément tubulaire (12), est notamment déviée deux fois dans une même direction giratoire, puis pénètre dans la tubulure de raccordement (6).

8. Soupape de distribution selon les revendications 1 à 3,
**caractérisée par le fait que**
l'élément tubulaire (12) possède un alésage intérieur (13) ouvert dans la région inférieure (14) dudit élément tubulaire (12).

9. Soupape de distribution selon la revendication 8,
**caractérisée par le fait que**,
dans une région inférieure (40) de la tubulure de raccordement (6), une pièce obturatrice (42) est fixée à la paroi de l'alésage (9) de ladite tubulure de raccordement (6), au moyen de membrures (41), si bien que, lors d'une rotation de l'élément tubulaire (12) autour de l'axe de coulissement (11), l'alésage intérieur (13) dudit élément tubulaire (12) vient se placer sur ladite pièce obturatrice (42), dans ledit alésage (9) pratiqué dans ladite tubulure de raccordement (6), ladite soupape de distribution (1) étant ainsi fermée ; ou bien que ladite soupape est ouverte lors d'une rotation dudit élément tubulaire (12) en sens inverse, de sorte que l'eau afflue dans ladite tubulure de raccordement (6) sans déviation réitérée, en empruntant ledit alésage intérieur ouvert (13) dudit élément tubulaire (12).

10. Soupape de distribution selon les revendications 8 et 9,
**caractérisée par le fait que**
la pièce obturatrice (42) est de réalisation notamment cylindrique.

11. Soupape de distribution selon l'une des revendications 8 à 10,
**caractérisée par le fait que**
l'alésage intérieur (13) de l'élément tubulaire (12) est de réalisation notamment tronconique dans la région inférieure (14).

12. Soupape de distribution selon l'une des revendications 1 à 11,
**caractérisée par le fait que**,
pour assurer l'étanchéité de l'élément tubulaire (12) vis-à-vis de l'alésage (9) pratiqué dans la tubulure de raccordement (6), la surface périphérique dudit élément tubulaire (12) présente un évidement (37) revêtant notamment la forme d'une rainure comportant un élément d'étanchement (38) de réalisation annulaire, qui procure l'étanchéité dudit élément tubulaire (12) dans la paroi dudit alésage (9) de ladite tubulure de raccordement (6).

13. Soupape de distribution selon l'une des revendications 1 à 12,
**caractérisée par le fait que**
le coulisseau (31) est guidé dans une douille (33) logée dans l'alésage intérieur (13) de l'élément tubulaire (12), de sorte que la pièce d'afflux (30) et la pièce de visualisation (32) peuvent se déplacer dans ledit alésage intérieur (13) dudit élément tubulaire (12), le long de l'axe de coulissement (11).

14. Soupape de distribution selon l'une des revendications 1 à 13,
**caractérisée par le fait**
**qu'**un ressort de pression (34), ceinturant hélicoïdalement le coulisseau (31), prend appui contre la pièce de visualisation (32) et contre la douille (33) prévue dans l'alésage intérieur (13) de l'élément tubulaire (12), et pousse la pièce d'afflux (30) vers une position extrême, sachant que ladite pièce d'afflux (30) est déviée par la circulation de l'eau dans la tubulure de raccordement (6).

15. Soupape de distribution selon l'une des revendications 1 à 14,
**caractérisée par le fait que**
le débit peut être lu, au moyen de la pièce de visualisation (32), sur l'échelle graduée située sur une surface périphérique (35) d'une coiffe (36) du dispositif (2) mesureur de débit.
